# EUROPEAN PATENT SPECIFICATION

(11) **EP 0 840 969 B1**
(45) Date of publication and mention of the grant of the patent: **22.09.2004**
(21) Application number: 96925225.3
(22) Date of filing: 12.07.1996
(51) Int. Cl.: H04L 12/24

(54) **UNIVERSAL OBJECT TRANSLATION AGENT**
UNIVERSELLER OBJEKT-ÜBERSETZUNGSAGENT
AGENT UNIVERSEL DE TRANSLATION D'OBJETS

(30) Priority: 26.07.1995 US 556731
(43) Date of publication of application: 13.05.1998
(73) Proprietor: Telefonaktiebolaget LM Ericsson (publ), 164 83 Stockholm (SE)
(72) Inventor: LEMIEUX, Yves, Kirkland, Quebec H9H 4M1 (CA)
(74) Representative: Sjöberg, Mats Hakan
(86) International application number: PCT/SE1996/000953
(87) International publication number: WO 1997/005703

(56) References cited:
- EP-A- 0 529 787
- WO-A-93/18598
- 5TH IEEE INTERNATIONAL SYMPOSIUM ON PERSONAL, INDOOR AND MOBILE RADIO COMMUNICATION, 18 - 23 September 1994, THE HAGUE, XP000613159 TOM LESKINEN: "GSM Subscriber Management on Top of a Generic TMN agent"
- IEEE TRANSACTIONS ON SOFTWARE ENGINEERING, vol. 17, no. 9, 1 September 1991, pages 944-953, XP000265866 OURI WOLFSON ET AL: "MANAGING COMMUNICATION NETWORKS BY MONITORING DATABASES"

## Description

### BACKGROUND OF THE INVENTION

### Technical Field of the Invention

This invention relates to the implementation of a managed object system for monitoring the operation of complex electrical systems. In particular, it relates to a universal agent for translating non-standard operations and maintenance parameters into managed objects for use in a higher level operations and management system.

### Description of Related Art

For several years, standardization committees have been specifying the principles for a Telecommunications Management Network (TMN). The TMN principles aim at being applicable across a broad range of telecommunications technologies. They recommend the use of independent management networks to manage telecommunications networks, elements in the telecommunications networks, and managing systems, communicating via well-defined standardized interfaces.

The need for such independent TMN systems arose because of increased automation of operations and maintenance tasks, the challenge of managing multi-vendor networks, and the rapid integration of new technologies into telecommunications networks. New automation required that machine-to-machine interfaces be developed to replace many of the existing manual functions. The need for managing heterogeneous equipment required that some form of standardization be implemented.

The TMN standards envision a network of management systems linked together and to various telecommunications networks. This set of systems was intended to constantly monitor and tune telecommunications networks and, in general, remove the need for continuous human intervention except for exceptional circumstances. The interfaces are standardized so that introducing equipment from new vendors occurs smoothly. New technologies can be introduced with a minimum of adaptations so that operational procedures may be changed via evolution and not revolution.

One of the pivotal documents for TMN implementation is CCITT Recommendation M.3010 "Principles for a Telecommunications Management Network," Geneva, 1992. Recommendation M.3010 includes a description of TMN nodes and mandatory function blocks as well as TMN interfaces and reference points.

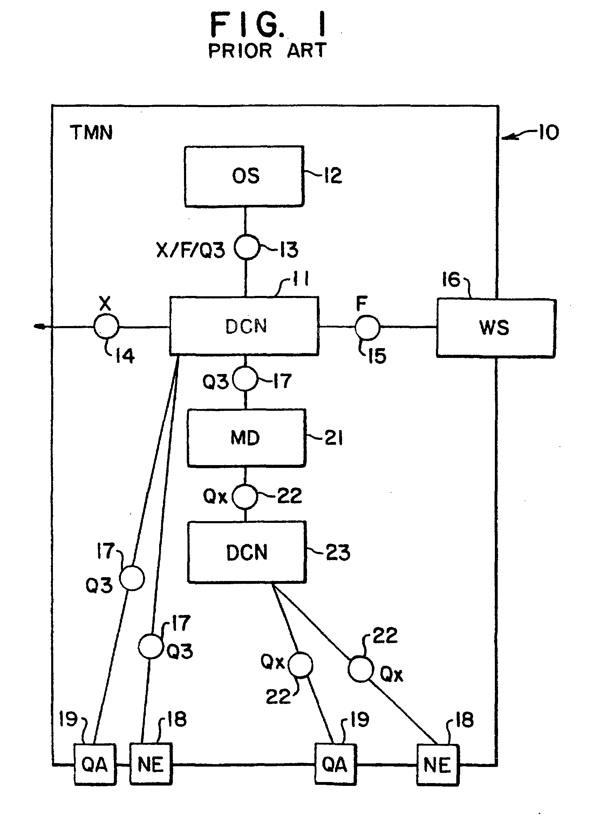

FIG. 1 is a simplified block diagram of a physical TMN architecture 10. A Data Communications Network (DCN) 11 is utilized to connect the various nodes through the various interfaces. An operation system (OS) 12 is connected to the DCN via an interface 13 which may comprise standard X, F, and Q3 interfaces. The X interface 14 is used for communicating between OSs belonging to different TMNs or between a TMN OS and a non-TMN OS that supports a TMN-like interface. The F interface 15 is used for communicating between a work station (WS) 16 and other nodes in the TMN system. The Q3 interface 17, sometimes referred to as the OS-NE interface, may connect the OS 12 and DCN 11 to standard network elements (NEs) 18 or Q-Adaptors (QAs) 19 which interface with non-standard NEs.

The network elements (NEs) 18 are the only nodes actually residing in the managed network, i.e., the telecommunications network. The primary function of the NEs is to handle traffic, not to manage the network. They are, however, the ultimate origin or destination of the management supervision and control. Q-Adaptors 19 are utilized to connect a TMN system to a non-TMN system, and are specific to each NE.

The Q3 interface 17 is also used to connect the DCN to mediation devices (MD) 21 or to connect two or more OSs in the same TMN. MD devices 21 may provide storage, adaptation, filtering, thresholding, or condensing operations on data received from subtending equipment. Fig. 1 also illustrates a Qx interface 22 connecting an additional DCN 23, and additional QAs 19, and NEs 18. The Qx interface 22 is envisioned as a Q3 interface 17 with less functionality, for use when cost or efficiency considerations preclude implementation of a fully functional Q3 interface.

TMN interfaces must be both general and flexible in order to accommodate the management of diverse technologies. The Open Systems Interconnection (OSI) systems management technology is utilized as the basis for the TMN interfaces. OSI systems management is a set of standards developed jointly by the International Standards Organization (ISO) and the International Telecommunications Union (ITU).

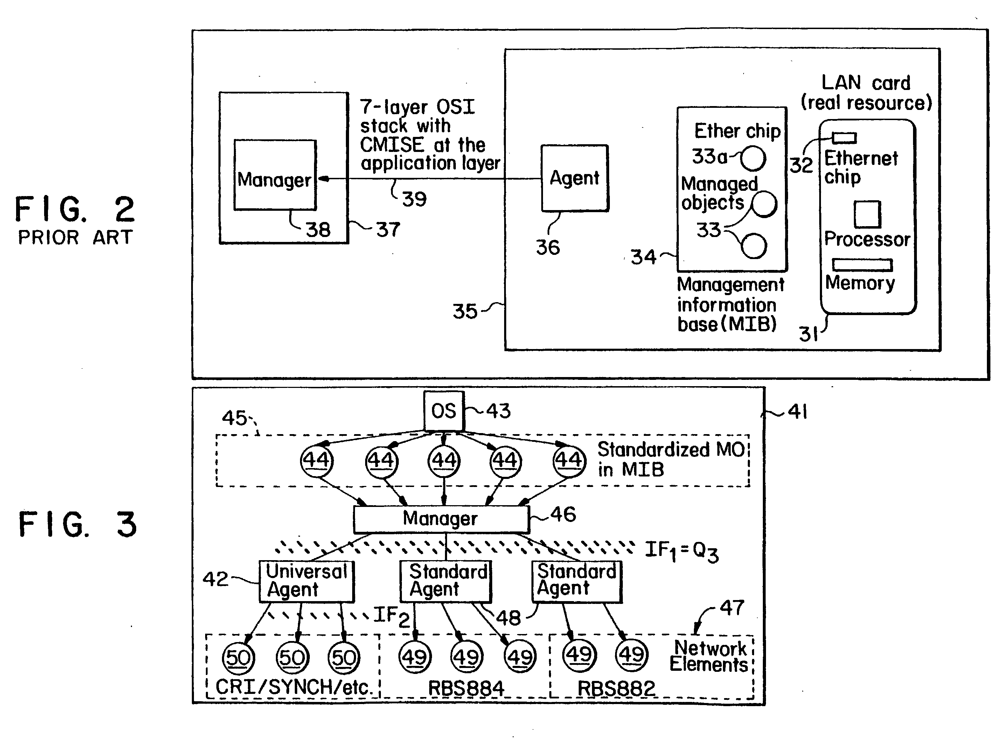

FIG. 2 is a block diagram illustrating the key concepts of OSI systems management with an exemplary local area network (LAN) card 31 managed using OSI systems management. The LAN card 31 includes a communication chip that implements a LAN protocol such as, for example, an Ethernet chip 32. OSI systems management turns each of the real resources of the LAN card 31 into managed objects (MOs) 33 which are conceptual views of resources (physical or logical) that need to be monitored and controlled in order to avoid failures and/or performance degradation in the network. The managed objects reside in a management information base (MIB) 34. In the exemplary illustration of FIG. 2, the MIB 34 is located in the managed network element 35 which is shown to include the real LAN card 31, the MIB 34, and an agent 36. In other implementations, the MIB may be part of the OS 37 as opposed to the network element. In FIG. 2, the MO "Ether_Chip" 33a is a conceptual view of the real Ethernet chip 32 that is on the LAN card 31.

MOs with the same properties are instances of an MO class. For example, an MO class "LAN_Chip" groups all instances of chips that implement a LAN protocol, including Ether_Chip 33a. MO classes are defined by their attributes, management operations, behavior, and notifications. Attributes are data elements and values that characterize the MO class. The attributes of LAN_Chip include the protocol the chip implements (Ethernet, Token Ring, etc.), the serial number, and the manufacturer identifier. The management operations are operations that can be applied to managed object instances. Examples of operations that can be applied to Ether_Chip are various tests of chip functions. The behavior exhibited by a MO instance is based on the resource the MO class represents. The potential outcome of various tests are part of the Ether_Chip behavior. Finally, the notifications are messages that MO instances emit spontaneously. The notifications, that the communication chip emits may include, for example, "packet received". This is emitted whenever a packet is received by the node.

FIG. 2 illustrates a manager 38 and an agent 36. OSI system management utilizes the concept of a manager and an agent. The manager 38 is the specific entity in a managing system that exerts the control, the coordination, and the monitoring. The manager 38 issues requests to perform operations to the agent 36. It also receives notifications emitted by MOs 33 and sent by the agent. The agent 36 is the specific entity in the managed system to which the control, the coordination, and the monitoring are directed. The agent 36 receives and executes requests sent by the manager 38, and sends notifications emitted by MOs 33 to the manager.

The manager and agent may communicate using a seven-layer OSI protocol suite 39. A key element of this suite is the Common Management Information Service Element (CMISE). CMISE consists of a service definition, the Common Management Information Service (CMIS), and a protocol specification, the Common Management Information Protocol (CMIP). Through the use of CMISE, all messages exchanged between the manager 38 and the agent 36 have a basic form of either requesting something of one or more managed objects 33, or of a managed object 33 informing another system of some event. The requests may be as simple as returning the value of a parameter or as complex as asking a network element to reconfigure itself.

The agent 36 receives the OSI messages and carries out the requests of the manager 38. The agent maps each request on an MO into a request on a real resource. Mechanisms used for the mapping are implementation-specific and not subject to standardization. Utilizing these concepts, the resources are modeled so that the manager 38 and the agent 36 have a common view.

The TMN interface standards are built upon OSI system management standards and comprise both generic standards and technology-specific standards. The generic standards are applicable across all telecommunications technologies and services. Objects specified in technology-specific standards are often imported from the generic standards or are sub-classes of generic objects.

Inheritance, also called sub-classing, is the procedure of specifying a new object class based upon a previously defined base object class or superclass. Thus, the new object class has all the characteristics of the base object class (superclass) with some new characteristics. This procedure of deriving technology-specific object classes from base generic.object classes insures a level of similarity between different technology-specific information models.

Allomorphism is a technique that may be utilized to manage diverse telecommunications technologies in a generic manner. It is the procedure of specifying a subclass that masquerades as a superclass. One use of this technique is to allow a technology-specific object to be treated as a more generic object. A related use of allomorphism is to provide a generic set of management capabilities in certain situations while providing vendor-specific enhancements in other situations. Inheritance and allomorphism, along with the concept of generic and technology-specific standards, are the mechanisms for providing the generality and consistency desirable in TMN interfaces.

To date, there has been insufficient use of TMN standards to determine if allomorphism is truly a useful concept. Operations and management systems are still hampered by an inability to interface with non-standard O & M subsystems such as network elements with embedded performance monitoring systems. While standard network elements may be monitored by standard agents reporting to a manager in a TMN system, non-standard network elements must be interfaced on a case-by-case basis utilizing multiple device-specific Q-Adaptors.

There are no known prior art teachings of a solution to the aforementioned deficiency and shortcoming such as that disclosed herein. It would be advantageous to have a universal agent capable of passing management information from multiple non-standard network elements to a manager in a TMN system. The present invention provides such a solution.

### SUMMARY OF THE INVENTION

An object of the present invention is to provide an interface between multiple old legacy, non-standard network elements and a TMN management system that eliminates the requirement to develop and install multiple device-specific Q-Adaptors.

Another object of the present invention is to reduce the repetition of alarms from single events by using a generic set of standardized managed objects and operation system function (OSF) processing.

In one aspect, the present invention is a universal agent for universally adapting old legacy, non-standard network elements at their level of alarm protocol to interface with a TMN management system. Thus, in a telecommunication system comprising a telecommunications management network (TMN) having a manager, and a managed network having a plurality of non-standard network elements that are not compliant with TMN interface standards, the present invention is a universal agent for interfacing the plurality of non-standard network elements with the TMN. The universal agent comprises means for continuously polling the plurality of non-standard network elements to count the plurality of non-standard network elements and determine the non-standard network element types in the managed network. The universal agent subsequently determines the status of the plurality of non-standard elements and refreshes a local agent-result database. The universal agent also includes means for receiving requests from the manager, and means for sending those requests to the plurality of non-standard network elements. The agent further includes means for retrieving management information from the plurality of network elements, and means for mapping that management information to a plurality of standard managed objects. Finally, the universal agent includes means for sending notifications to the manager.

In another aspect, the present invention is a method of mapping fault management and performance management functions of old legacy, non-standard network elements to standard generic existing managed object models. The steps include polling a plurality of non-standard network elements to determine the number and types of network elements in said managed network. This is followed by retrieving management information from the plurality of non-standard network elements and identifying a plurality of industry standard generic managed object models, each of which is suitable for representing a type of management information retrieved from the plurality of network elements. Finally, the method designates an industry standard generic managed object model for each of the types of management information.

There are also provided a telecommunication system according to Claim 9 and a method of providing management information according to Claim 16.

### BRIEF DESCRIPTION OF THE DRAWINGS

The invention will be better understood and its numerous objects and advantages will become more apparent to those skilled in the art by reference to the following drawing, in conjunction with the accompanying specification, in which:
FIG. 1 (Prior Art) is a simplified block diagram of a physical TMN architecture;
FIG. 2 (Prior Art) is a block diagram illustrating the key concepts of OSI systems management with an exemplary local area network (LAN) card managed using OSI systems management;
FIG. 3 is a block diagram of a TMN-based operations and management system in which a universal agent has been implemented in accordance with the teachings of the present invention;
FIG. 4 is a simplified functional block diagram of an operation system divided into a workstation function and a operation system function;
FIG. 5 is a flow chart of the functions performed by the TMN-based operations and management system of FIG. 3; and
FIG. 6 is a high-level block diagram of a digital communication network which is managed by a TMN management system.

### DETAILED DESCRIPTION OF EMBODIMENTS

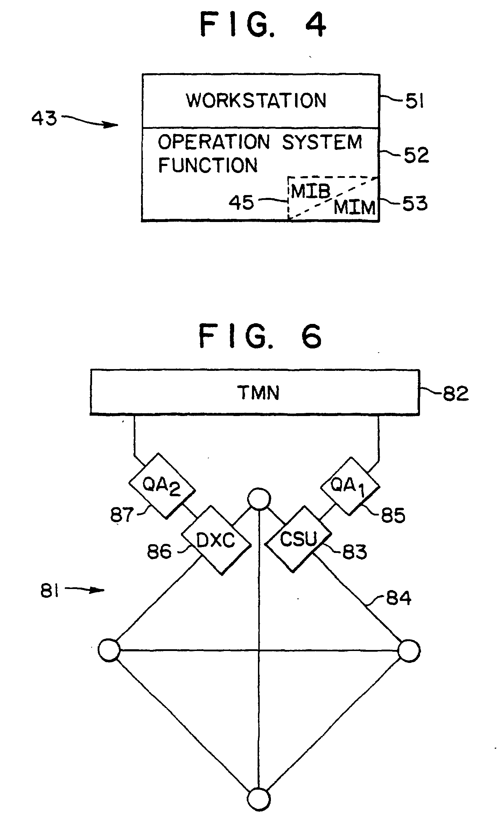

FIG. 3 is a block diagram of a TMN-based operations and management system 41 in which a universal agent 42 has been implemented in accordance with the teachings of the present invention. An operation system (OS) 43 communicates with standardized managed objects (MOs) 44 resident in a management information base (MIB) 45. Although the MIB 45 is illustrated as a separate entity from the OS 43 in FIG. 3, those skilled in the art will recognize that the MIB may also be implemented as part of the OS. As shown in FIG. 4, the operation system (OS) 43 may be divided into two functional parts, a workstation function (WS) 51 and a operation system function (OSF) 52. The MIB 45 may be implemented as part of the operation system function 52. In addition, the MIB 45 may also include a managed information model (MIM) 53 as defined in ITU-T Recommendation Q.821 "Specifications of Signalling System No. 7 Q3 Interface/Stage 2 and Stage 3 Description for the Q3 Interface - Alarm Surveillance" and ITU-T Recommendation Q.822, the standard for performance management.

Referring again to FIG. 3, the managed objects 44 serve as conceptual views of resources for the OSF to communicate to a manager 46. The manager 46, in turn, exerts the control, the coordination, and the monitoring of the managed network 47 through agents. The manager issues requests to perform operations to the agents and receives notifications emitted by network elements and sent by the agents. The manager communicates with the agents through a first interface (IF₁) which is a standard Q3 interface.

The present invention utilizes two types of agents, standard agents 48 and the universal agent 42. The standard agents 48 communicate with TMN-standard network elements 49 and TMN-standard network management systems. The universal agent 42 communicates via a second interface (IF₂) with non-standard network elements 50 and via a Q3 interface with TMN-standard network management systems. The universal agent 42 utilizes one or more look-up tables enabling translations from non-standard network elements to the TMN-based management system. The IF₂ interface (i.e., that interface between the universal agent 42 and the non-standard network elements 50), access standard data formats from the network elements to allow the universal agent 42 to translate them to object oriented formats. The IF₂ interface may be, for example, an alarm interface such as T/BOS, EIA, ASCII, DRY C contact relay, or LAPD protocol.

When a non-standard network element 50 comes on line with its universal agent 42, the agent goes through an initialization phase in which the NEs 50 are polled and alarming protocols are identified to the universal agent 42 by an operator configuring the system. This may be done through a workstation which may be local or remote. Thus, in the initialization phase, the operator intervenes to configure the universal agent 42 for the alarming protocols it should use.

The operator then sets up the relationship between real world events to be monitored and managed object models in the system. In other words, the operator maps events to generic standard managed object representations. The ITU standards Q.821 and Q.822 identify generic standard managed objects to which each event may be mapped. For example, a network element may monitor such events as bit error rate (BER), CRC-6, and synchronization bits. The operator may designate a generic managed object such as the "in-service performance" errored second (ES) managed object defined in ITU Q.822 to represent, for example, a BER event. When a BER event occurs, it triggers the in-service performance managed object and shows as an alarm.

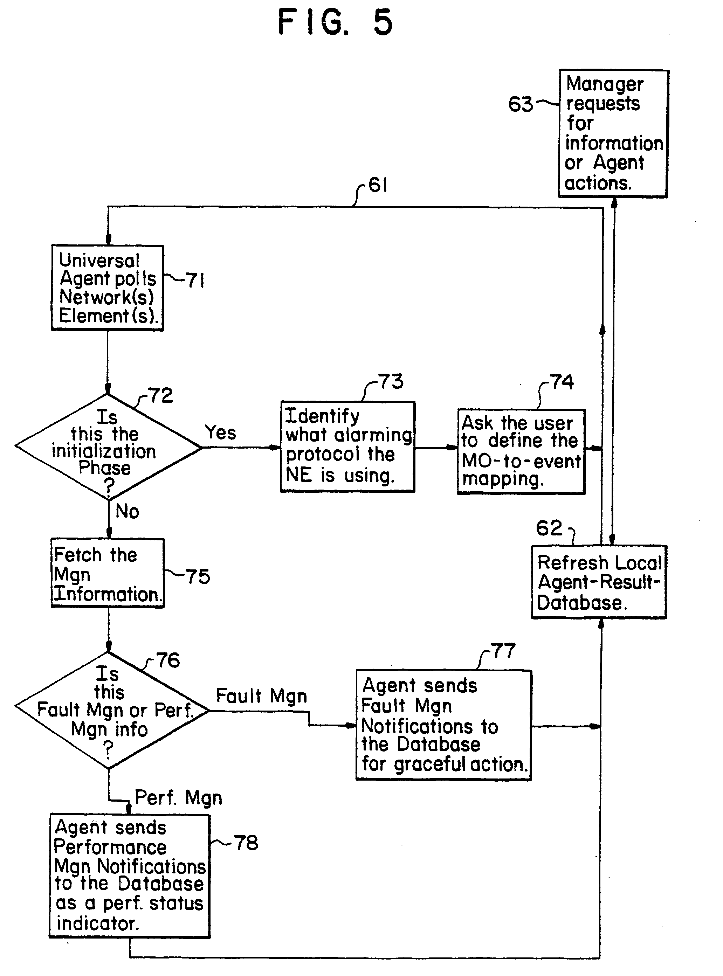

FIG. 5 is a flow chart of the functions performed by the TMN-based operations and management system of FIG. 3. The functions are performed continuously in a closed loop 61 which results in the refreshing of a local Agent-Result database 62. From time to time, as needed, the TMN system manager 46 (FIG. 3) may request information from the universal agent 42 or request an action on the part of the agent. These requests are shown at step 63. The requests are made to the local Agent-Result database 62 where requested information is retrieved, or requested actions are injected into the loop 61.

At step 71, the universal agent 42 polls the non-standard network element(s) 50 to verify the status of NEs in the managed system 47. The program then moves to step 72 where it is determined whether the system is in an initialization phase. If it is determined that the system is in an initialization phase, then the program moves to step 73 where the alarming protocols the network elements 50 are using are identified to the universal agent 42. The universal agent 42 then asks the user to define the MO-to-event mapping at step 74. Thereafter, the program returns to step 71 where the universal agent again polls the network elements for status. If it is determined at step 72, however, that the system is not in the initialization phase, the program moves to step 75 where management information is retrieved from the network elements 50.

The program then moves to step 76 where is determined whether the retrieved information is fault management information or performance management information. This determination is made utilizing standard procedures defined in ITU-Q.821 and Q.822.

If it is determined that the retrieved information is fault management information, then the program moves to step 77 where the agent sends fault management notifications to the Agent-Result database 62 for graceful action. At that point, the operator may, for example, determine whether to shut down the network for repairs, reroute the data flow around the faulty component, or wait until the next scheduled maintenance period to take action. Additionally, an automated system may automatically reroute the data flow until such determinations are made by the operator.

If it is determined, however, at step 76 that the retrieved information is performance management information, then the program moves to step 78 where the agent sends performance management notifications to the Agent-Result database 62 as a performance status indicator indicating the quality of the network.

Thus, the universal agent of the present invention establishes an interface between existing non-standard network elements and a TMN management system. The universal agent maps management information extracted from the non-standard elements onto a generic set of standardized managed objects thereby enabling the TMN management system to interact with the network elements utilizing their existing alarming protocols. By using a common set of managed objects as part of the management information model (MIM) in the OSF, repetition of alarms is reduced. OSF processing reduces alarm repetition by looking at the origination point of each alarm and determining whether the alarm has previously been reported to the manager.

### Detailed Example

FIG. 6 is a high-level block diagram of a digital communication network 81 which is managed by a TMN management system 82. The network of FIG. 6 utilizes a channel service unit (CSU) 83 as an exemplary network element. Operators who do not have control of a network may install a CSU 83 to obtain information about the network status. The CSU 83 monitors the T-1 line 84 and reports such parameters as bit error rate (BER) and cyclic redundancy check-6 (CRC-6) derived from T-1 line framing bits. The CSU 83 converts these measurements to performance reference messages (PRMs) in order to report them to the operator. PRMs may include, for example, peak unavailable time (UT), average total time of availability (TT), and severed errored seconds (SES) indicating the number of seconds that the bit error rate is worse than 10⁻³. These messages indicate when a line has started to degrade so that corrective action can be taken prior to failure.

As useful as the CSU information is, however, it is not compliant with TMN standards, and cannot be sent to the TMN management system 82 without the use of a device-specific Q-Adaptor (QA₁) 85. The device-specific Q-Adaptor (QA₁) 85 must be utilized for the CSU 83 to interface with the TMN system 82. A problem arises when the operator replaces a specific CSU with another device such as, for example, a digital cross connector (DXC) 86. In existing systems, another device-specific Q-Adaptor (QA₂) 87 must be developed and utilized to interface the DXC 86 with the TMN system 82.

With the universal agent of the present invention, the same universal agent may be utilized to interface both the CSU 83 and the DXC 86 with the TMN system, as shown in FIG. 3. The operator merely reconfigures the universal agent as described above for the DXC alarm protocols and event-to-object translation. By designating, for example, the performance reference messages UT, TT, and SES as events 1, 2, and 3 respectively, each event and PRM is mapped by the present invention to a standard generic managed object as specified in ITU Q.821 and/or Q.822. The universal agent may provide alarms utilizing, for example, the Q.921/LAPD (level 2) protocol as described in CCITT Recommendation Q.921 and ANSI T1.403-1989, "Carrier-to-Carrier Installation - DS1 Metallic Interface," herein.

## Claims

1. A universal agent (42) for a telecommunication system said system comprising a telecommunications management network TMN having a manager (46) and a managed network (47) having a plurality of non-standard network elements (50) that are not compliant with TMN interface standards, for interfacing said plurality of non-standard network elements (50) with said TMN,
**characterized in**
means for polling said plurality of non-standard network elements (50) to count said plurality of non-standard network elements (50) and determine said non-standard network element types in said managed network (47);
means for determining the status of said plurality of non-standard elements (50);
means for receiving requests from said manager (46);
means (IF2) for sending said requests to said plurality of non-standard network elements (50);
means for retrieving management information from said plurality of network elements (50);
means for mapping said management information to a plurality of standard managed objects (44); and
means (IF1) for sending notifications to said manager (46).

2. The universal agent of claim 1, wherein said plurality of standard managed objects (44) are generic managed objects (44) defined in TMN industry standards.

3. The universal agent of claim 2, wherein said management information includes fault management information and performance management information.

4. The universal agent of claim 2, wherein said management information includes standard performance reference messages.

5. The universal agent of claim 4, wherein said means (IF1) for sending notifications to said manager (46) includes a standard Q3 interface.

6. The universal agent of claim 5, wherein said means (IF2) for sending said requests to said plurality of non-standard network elements (50) includes an interface selected from the group consisting of:
T/BOS;
EIA;
ASCII;
DRY C contact relay; and
LAPD protocol.

7. A method for a telecommunication system comprising a telecommunications management network TMN having a manager (46) and a managed network (47) having a plurality of non-standard network elements (50) that are not compliant with TMN interface standards, for mapping fault management functions and performance management functions of said non-standard network elements (50) to standard generic managed objects,
**characterized in** the steps of:
polling (71) said plurality of non-standard network elements (50) to count said plurality of non-standard network elements (50) and determine said non-standard network element types in said managed network (47);
determining (72) the status of said plurality of non-standard elements;
retrieving (75) management information from said plurality of non-standard network elements (50);
identifying (76) a plurality of industry standard generic managed objects, each of said standard generic managed objects being suitable for representing a type of management information retrieved from said plurality of network elements (50); and
designating (78) an industry standard generic managed object for each of said types of management information.

8. The method of claim 7, wherein said step (75) of retrieving management information from said plurality of non-standard network elements (50) includes retrieving fault management functions and performance management functions from said non-standard network elements (50).

9. A telecommunication system comprising:
a telecommunications management network TMN having a manager (46);
a managed network (47) having a plurality of non-standard network elements (50) that are not compliant with TMN interface standards;
**characterized in**
a universal agent (42) for interfacing said plurality of non-standard network elements (50) with said TMN, said universal agent comprising:
means for polling said plurality of non-standard network elements (50) to count said plurality of non-standard network elements (50) and determine said non-standard network element types in said managed network (47);
means for determining the status of said plurality of non-standard elements;
means for receiving requests from said manager (46);
means for sending said requests to said plurality of non-standard network elements (50);
means for retrieving management information from said plurality of network elements (50);
means for mapping said management information to a plurality of standard managed objects (44); and
means for sending notifications to said manager (46).

10. The telecommunication system of claim 9, wherein said telecommunications management network TMN includes:
an operation system for controlling said TMN; and
a management information base MIB which contains said standard managed objects (44).

11. The telecommunication system of claim 10, wherein said managed network (47) also includes a plurality of standard network elements (49).

12. The telecommunication system of claim 11, further comprising a plurality of standard agents (48) for interfacing said plurality of standard network elements (49) with said TMN.

13. The telecommunication system of claim 12, further comprising an industry standard interface for interfacing said manager (46) with said universal agent (42).

14. The telecommunication system of claim 13, wherein said industry standard interface is a Q3 interface.

15. The telecommunication system of claim 14, wherein said Q3 interface also interfaces said manager (46) with said plurality of standard agents.

16. A method of providing to a telecommunications management network TMN system, management information from a managed network (47) having a plurality of non-standard network elements (50) of different types that are not compliant with TMN standards, said management information comprising events,
**characterized in** the steps of:
providing a database (45; Fig 3) to store said management information;
connecting said database (45) to a manager (46) in said TMN system;
continuously polling said plurality of non-standard network elements (50) to count said non-standard network elements (50) and determine the types of non-standard network elements (50) in said managed network (47);
determining whether said TMN system is in an initialization phase;
identifying, upon determining that said TMN system is in an initialization phase, an alarm protocol each of said plurality of non-standard network elements (50) is utilizing;
mapping said events to managed objects (44) in said TMN system;
determining, upon determining that said TMN system is not in an initialization phase, the status of said plurality of non-standard network elements (50); and
refreshing said database (45) with management information indicating the status of said network elements (50).

17. The method of claim 16, further comprising the steps of:
sending requests for management information from said manager (46) to said database (45); and
sending said requested management information from said database (45) to said manager (46).

18. The method of claim 17, further comprising the steps of:
sending requests for actions to be performed on said plurality of non-standard network elements (50) from said manager (46) to said database (45);
performing said actions on said plurality of non-standard network elements (50);
reporting results of said actions to said database (45); and
sending said results from said database (45) to said manager (46).

19. The method of claim 18, wherein said step of determining the status of said plurality of non-standard network elements (50) includes the steps of:
retrieving management information from said plurality of non-standard network elements (50); and
determining whether said retrieved management information is fault management information or performance management information.

20. The method of claim 19, wherein said step of refreshing said database (45) with management information includes sending fault management notifications to said database (45) upon determining that said retrieved management information is fault management information.

21. The method of claim 20, wherein said step of refreshing said database (45) with management information includes sending performance management notifications to said database (45) as performance status indicators upon determining that said retrieved management information is performance management information.

## Patentansprüche

1. Universeller Agent (42) für ein Telekommunikationssystem, wobei das System ein Telekommunikationsverwaltungsnetzwerk TMN mit einem Verwalter (46) und einem verwalteten Netzwerk (47) mit einer Vielzahl von nichtstandardisierten Netzwerkelementen (50) umfaßt, die TMN-Schnittstellenstandards nicht erfüllen, zur Anpassung der Vielzahl von nichtstandardisierten Netzwerkelementen (50) an das TMN, **gekennzeichnet durch**
eine Einrichtung zum Aufrufen der Vielzahl von nichtstandardisierten Netzwerkelementen (50), die Vielzahl von nichtstandardisierten Netzwerkelementen (50) zu zählen und die nichtstandardisierten Netzwerkelementtypen in dem verwalteten Netzwerk (47) zu bestimmen;
eine Einrichtung zum Bestimmen des Status der Vielzahl von nichtstandardisierten Netzwerkelementen (50);
eine Einrichtung zum Empfangen von Anforderungen von dem Verwalter (46);
eine Einrichtung (IF2) zum Senden der Anforderungen an die Vielzahl von nichtstandardisierten Netzwerkelementen (50);
eine Einrichtung zum Abrufen von Verwaltungsinformation von der Vielzahl von Netzwerkelementen (50);
eine Einrichtung zum Zuordnen der Verwaltungsinformation zu einer Vielzahl von standardisierten verwalteten Objekten (44); und
eine Einrichtung (IF1) zum Senden von Benachrichtigungen an den Verwalter (46).

2. Universeller Agent nach Anspruch 1, wobei die Vielzahl von standardisierten verwalteten Objekten (44) verwaltete Gattungsobjekte (44) sind, die in TMN-Industriestandards definiert sind.

3. Universeller Agent nach Anspruch 2, wobei die Verwaltungsinformation Störungsverwaltungsinformation und Leistungsverwaltungsinformation aufweist.

4. Universeller Agent nach Anspruch 2, wobei die Verwaltungsinformation standardisierte Leistungsreferenznachrichten aufweist.

5. Universeller Agent nach Anspruch 4, wobei die Einrichtung (IF1) zum Senden von Benachrichtigungen an den Verwalter (46) eine Q3-Standard-Schnittstelle aufweist.

6. Universeller Agent nach Anspruch 5, wobei die Einrichtung (IF2) zum Senden der Anforderungen an die Vielzahl von nichtstandardisierten Netzwerkelementen (50) eine Schnittstelle aufweist, die aus der Gruppe gewählt ist, die aus folgendem besteht:
T/BOS
EIA;
ASCII;
DRY C-Kontaktrelais; und
LAPD-Protokoll.

7. Verfahren für ein Telekommunikationssystem mit einem Telekommunikationsverwaltungsnetzwerk TMN mit einem Verwalter (46) und einem verwalteten Netzwerk (47) mit einer Vielzahl von nichtstandardisierten Netzwerkelementen (50), die TMN-Schnittstellenstandards nicht erfüllen, zum Zuordnen von Störungsverwaltungsfunktionen und Leistungsverwaltungsfunktionen der nichtstandardisierten Netzwerkelemente (50) zu standardisierten verwalteten Gattungsobjekten, **gekennzeichnet durch** die folgenden Schritte:
Aufrufen (71) der Vielzahl von nichtstandardisierten Netzwerkelementen (50), die Vielzahl von nichtstandardisierten Netzwerkelementen (50) zu zählen und die nichtstandardisierten Netzwerkelementtypen in dem verwalteten Netzwerk (47) zu bestimmen;
Bestimmen (72) des Status der Vielzahl von nichtstandardisierten Elementen;
Abrufen (75) von Verwaltungsinformation von der Vielzahl von nichtstandardisierten Netzwerkelementen (50);
Identifizieren (76) einer Vielzahl von verwalteten Industriestandard-Gattungsobjekten, wobei jedes der verwalteten Industriestandard-Gattungsobjekte zur Darstellung eines Typs von Verwaltungsinformation geeignet ist, die von der Vielzahl von Netzwerkelementen (50) abgerufen wird; und
Festlegen (78) eines verwalteten Industriestandard-Gattungsobjekts für jeden der Typen von Verwaltungsinformation.

8. Verfahren nach Anspruch 7, wobei der Schritt (75) des Abrufens von Verwaltungsinformation von der Vielzahl von nichtstandardisierten Netzwerkelementen (50) den folgenden Schritt aufweist: Abrufen von Störungsverwaltungsfunktionen und Leistungsverwaltungsfunktionen von den nichtstandardisierten Netzwerkelementen (50).

9. Telekommunikationssystem mit:
einem Telekommunikationsverwaltungsnetzwerk TMN mit einem Verwalter (46);
einem verwalteten Netzwerk (47) mit einer Vielzahl von nichtstandardisierten Netzwerkelementen (50), die TMN-Schnittstellenstandards nicht erfüllen; **gekennzeichnet durch**
einen universellen Agenten (42) zur Anpassung der Vielzahl von nichtstandardisierten Netzwerkelementen (50) an das TMN, wobei der universelle Agent umfaßt:
eine Einrichtung zum Aufrufen der Vielzahl von nichtstandardisierten Netzwerkelementen (50), die Vielzahl von nichtstandardisierten Netzwerkelementen (50) zu zählen und die nichtstandardisierten Netzwerkelementtypen in dem verwalteten Netzwerk (47) zu bestimmen;
eine Einrichtung zum Bestimmen des Status der Vielzahl von nichtstandardisierten Netzwerkelementen (50);
eine Einrichtung zum Empfangen von Anforderungen von dem Verwalter (46);
eine Einrichtung zum Senden der Anforderungen an die Vielzahl von nichtstandardisierten Netzwerkelementen (50);
eine Einrichtung zum Abrufen von Verwaltungsinformation von der Vielzahl von Netzwerkelementen (50);
eine Einrichtung zum Zuordnen der Verwaltungsinformation zu einer Vielzahl von standardisierten verwalteten Objekten (44); und
eine Einrichtung zum Senden von Benachrichtigungen an den Verwalter (46).

10. Telekommunikationssystem nach Anspruch 9, wobei das Telekommunikationsverwaltungsnetzwerk TMN aufweist:
ein Betriebssystem zum Steuern des TMN; und
eine Verwaltungsinformationsbasis MIB, die die standardisierten verwalteten Objekte (44) enthält.

11. Telekommunikationssystem nach Anspruch 10, wobei das verwaltete Netzwerk (47) auch eine Vielzahl von standardisierten Netzwerkelementen (49) enthält.

12. Telekommunikationssystem nach Anspruch 11, ferner mit einer Vielzahl von standardisierten Agenten (48) zur Anpassung der Vielzahl von standardisierten Netzwerkelementen (49) an das TMN.

13. Telekommunikationssystem nach Anspruch 12, ferner mit einer Industriestandard-Schnittstelle zum Anpassen des Verwalters (46) an den universellen Agenten (42).

14. Telekommunikationssystem nach Anspruch 13, wobei die Industriestandard-Schnittstelle eine Q3-Schnittstelle ist.

15. Telekommunikationssystem nach Anspruch 14, wobei die Q3-Schnittstelle auch den Verwalter (46) an die Vielzahl von Standardagenten anpaßt.

16. Verfahren zum Liefern von Verwaltungsinformation von dem verwalteten Netzwerk (47) mit einer Vielzahl von nichtstandardisierten Netzwerkelementen (50) verschiedener Typen, die TMN-Standards nicht erfüllen, an das System des Telekommunikationsverwaltungsnetzwerks TMN, wobei die Verwaltungsinformation Ereignisse umfaßt, **gekennzeichnet durch** die folgenden Schritte:
Bereitstellung einer Datenbasis (45; Fig. 3), um die Verwaltungsinformation zu speichern;
Verbinden der Datenbasis (45) mit einem Verwalter (46) in dem TMN-System;
kontinuierliches Aufrufen der Vielzahl von nichtstandardisierten Netzwerkelementen (50), die nichtstandardisierten Netzwerkelemente (50) zu zählen und die Typen der nichtstandardisierten Netzwerkelemente (50) in dem verwalteten Netzwerk (47) zu bestimmen;
Bestimmen, ob das TMN-System in einer Initialisierungsphase ist;
nachdem bestimmt worden ist, daß das TMN-System in einer Initialisierungsphase ist, Identifizieren eines Alarmprotokolls, das jedes aus der Vielzahl von nichtstandardisierten Netzwerkelementen (50) benutzt;
Zuordnen dieser Ereignisse zu verwalteten Objekten (44) in dem TMN-System;
nachdem bestimmt worden ist, daß das TMN-System nicht in einer Initialisierungsphase ist, Bestimmen des Status der Vielzahl von nichtstandardisierten Netzwerkelementen (50); und
Aktualisieren der Datenbasis (45) mit Verwaltungsinformation, die den Status der Netzwerkwerkelemente (50) anzeigt.

17. Verfahren nach Anspruch 16, ferner mit den folgenden Schritten:
Senden von Verwaltungsinformationsanforderungen von dem Verwalter (46) an die Datenbasis (45); und
Senden der angeforderten Verwaltungsinformation von der Datenbasis (45) an den Verwalter (46).

18. Verfahren nach Anspruch 17, ferner mit den folgenden Schritten:
Senden von Anforderungen von Maßnahmen, die in der Vielzahl von nichtstandardisierten Netzwerkelementen (50) durchzuführen sind, von dem Verwalter (46) an die Datenbasis (45);
Durchführen der Maßnahmen in der Vielzahl von nichtstandardisierten Netzwerkelementen (50);
Melden von Ergebnissen der Maßnahmen an die Datenbasis (45); und
Senden der Ergebnisse von der Datenbasis (45) an den Verwalter (46).

19. Verfahren nach Anspruch 18, wobei der Schritt des Bestimmens des Status der Vielzahl von nichtstandardisierten Netzwerkelementen (50) die folgenden Schritte aufweist:
Abrufen von Verwaltungsinformation von der Vielzahl von nichtstandardisierten Netzwerkelementen (50); und
Bestimmen, ob die abgerufene Verwaltungsinformation Störungsverwaltungsinformation oder Leistungsverwaltungsinformation ist.

20. Verfahren nach Anspruch 19, wobei der Schritt des Aktualisierens der Datenbasis (45) mit Verwaltungsinformation den folgenden Schritt aufweist: Senden von Störungsverwaltungsbenachrichtigungen an die Datenbasis (45), nachdem bestimmt worden ist, daß die abgerufene Verwaltungsinformation Störungsverwaltungsinformation ist.

21. Verfahren nach Anspruch 20, wobei der Schritt des Aktualisierens der Datenbasis (45) mit Verwaltungsinformation den folgenden Schritt aufweist: Senden von Leistungsverwaltungsbenachrichtigungen an die Datenbasis (45) als Leistungsstatusindikatoren, nachdem bestimmt worden ist, daß die abgerufene Verwaltungsinformation Leistungsverwaltungsinformation ist.

## Revendications

1. Agent universel (42) pour un système de télécommunication, ledit système comprenant un réseau de gestion de télécommunication TMN qui comporte un gestionnaire (46) et un réseau géré (47) qui comporte une pluralité d'éléments de réseau non standards (50) qui ne sont pas conformes à des standards d'interface TMN, pour interfacer ladite pluralité d'éléments de réseau non standards (50) avec ledit TMN,
**caractérisé par**:
un moyen pour interroger ladite pluralité d'éléments de réseau non standards (50) pour compter ladite pluralité d'éléments de réseau non standards (50) et pour déterminer lesdits types d'éléments de réseau non standards dans ledit réseau géré (47);
un moyen pour déterminer l'état de ladite pluralité d'éléments de réseau non standards (50);
un moyen pour recevoir des requêtes en provenance dudit gestionnaire (46);
un moyen (IF2) pour envoyer lesdites requêtes sur ladite pluralité d'éléments de réseau non standards (50);
un moyen pour retrouver une information de gestion à partir de ladite pluralité d'éléments de réseau non standards (50);
un moyen pour cartographier ladite information de gestion sur une pluralité d'objets gérés standards (44); et
un moyen (IF1) pour envoyer des notifications audit gestionnaire (46).

2. Agent universel selon la revendication 1, dans lequel les objets de ladite pluralité d'objets gérés standards (44) sont des objets gérés génériques (44) qui sont définis selon des standards de l'industrie des TMN.

3. Agent universel selon la revendication 2, dans lequel ladite information de gestion inclut une information de gestion par défaut et une information de gestion de performance.

4. Agent universel selon la revendication 2, dans lequel ladite information de gestion inclut des messages de référence de performance standards.

5. Agent universel selon la revendication 4, dans lequel ledit moyen (IF1) pour envoyer des notifications audit gestionnaire (46) inclut une interface Q3 standard.

6. Agent universel selon la revendication 5, dans lequel ledit moyen (IF2) pour envoyer lesdites requêtes sur ladite pluralité d'éléments de réseau non standards (50) inclut une interface qui est choisie parmi le groupe comprenant:
T/BOS;
EIA;
ASCII;
un relais de contact DRY C; et
un protocole LAPD.

7. Procédé pour un système de télécommunication comprenant un réseau de gestion de télécommunication TMN qui comporte un gestionnaire (46) et un réseau géré (47) qui comporte une pluralité d'éléments de réseau non standards (50) qui sont non conformes à des standards d'interface TMN, pour cartographier des fonctions de gestion par défaut et des fonctions de gestion de performance desdits éléments de réseau non standards (50) selon des objets gérés génériques standards,
**caractérisé par** les étapes de:
interrogation (71) de ladite pluralité d'éléments de réseau non standards (50) pour compter ladite pluralité d'éléments de réseau non standards (50) et pour déterminer lesdits types d'éléments de réseau non standards dans ledit réseau géré (47);
détermination (72) de l'état de ladite pluralité d'éléments de réseau non standards;
recherche (75) d'une information de gestion à partir de ladite pluralité d'éléments de réseau non standards (50);
identification (76) d'une pluralité d'objets gérés génériques standards de l'industrie, chacun desdits objets gérés génériques standards convenant pour représenter un type d'information de gestion comme retrouvé à partir de ladite pluralité d'éléments de réseau non standards (50); et
désignation (78) d'un objet géré générique standard de l'industrie pour chacun desdits types d'information de gestion.

8. Procédé selon la revendication 7, dans lequel ladite étape (75) de recherche d'une information de gestion à partir de ladite pluralité d'éléments de réseau non standards (50) inclut la recherche de fonctions de gestion par défaut et de fonctions de gestion de performance à partir desdits éléments de réseau non standards (50).

9. Système de télécommunication comprenant:
un réseau de gestion de télécommunication TMN qui comporte un gestionnaire (46);
un réseau géré (47) qui comporte une pluralité d'éléments de réseau non standards (50) qui ne sont pas conformes à des standards d'interface TMN,
**caractérisé par**:
un agent universel (42) pour interfacer ladite pluralité d'éléments de réseau non standards (50) avec ledit TMN, ledit agent universel comprenant:
un moyen pour interroger ladite pluralité d'éléments de réseau non standards (50) pour compter ladite pluralité d'éléments de réseau non standards (50) et pour déterminer lesdits types d'éléments de réseau non standards dans ledit réseau géré (47);
un moyen pour déterminer l'état de ladite pluralité d'éléments de réseau non standards (50);
un moyen pour recevoir des requêtes en provenance dudit gestionnaire (46);
un moyen pour envoyer lesdites requêtes sur ladite pluralité d'éléments de réseau non standards (50);
un moyen pour retrouver une information de gestion à partir de ladite pluralité d'éléments de réseau non standards (50);
un moyen pour cartographier ladite information de gestion sur une pluralité d'objets gérés standards (44); et
un moyen pour envoyer des notifications audit gestionnaire (46).

10. Système de télécommunication selon la revendication 9, dans lequel ledit réseau de gestion de télécommunication TMN inclut:
un système de fonctionnement pour commander ledit TMN; et
une base d'information de gestion MIB qui contient lesdits objets gérés standards (44).

11. Système de télécommunication selon la revendication 10, dans lequel ledit réseau géré (47) inclut également une pluralité d'éléments de réseau standards (49).

12. Système de télécommunication selon la revendication 11, comprenant en outre une pluralité d'agents standards (48) pour interfacer ladite pluralité d'éléments de réseau standards (49) avec ledit TMN.

13. Système de télécommunication selon la revendication 12, comprenant en outre une interface de standard de l'industrie pour interfacer ledit gestionnaire (46) avec ledit agent universel (42).

14. Système de télécommunication selon la revendication 13, dans lequel ladite interface de standard de l'industrie est une interface Q3.

15. Système de télécommunication selon la revendication 14, dans lequel ladite interface Q3 interface également ledit gestionnaire (46) avec ladite pluralité d'agents standards.

16. Procédé de fourniture, à un système de réseau de gestion de télécommunication TMN, d'une information de gestion en provenance d'un réseau géré (47) qui comporte une pluralité d'éléments de réseau non standards (50) de différents types qui ne sont pas conformes à des standards TMN, ladite information de gestion comprenant des événements,
**caractérisé par** les étapes de:
fourniture d'une base de données (45; figure 3) pour stocker ladite information de gestion;
connexion de ladite base de donnée (45) à un gestionnaire (46) dans ledit système TMN;
interrogation en continu de ladite pluralité d'éléments de réseau non standards (50) pour compter lesdits éléments de réseau non standards (50) et pour déterminer les types d'éléments de réseau non standards (50) dans ledit réseau géré (47);
détermination de si oui ou non ledit système TMN est dans une phase d'initialisation;
identification, suite à la détermination du fait que ledit système TMN est dans une phase d'initialisation, d'un protocole d'alarme que chacun de ladite pluralité d'éléments de réseau non standards (50) est en train d'utiliser;
cartographie desdits événements sur des objets gérés (44) dans ledit système TMN;
détermination, suite à la détermination du fait que ledit système TMN n'est pas dans une phase d'initialisation, de l'état de ladite pluralité d'éléments de réseau non standards (50); et
rafraîchissement de ladite base de données (45) avec une information de gestion qui indique l'état desdits éléments de réseau (50).

17. Procédé selon la revendication 16, comprenant en outre les étapes de:
envoi de requêtes pour une information de gestion depuis ledit gestionnaire (46) sur ladite base de données (45); et
envoi de ladite information de gestion demandée en requête depuis ladite base de données (45) sur ledit gestionnaire (46).

18. Procédé selon la revendication 17, comprenant en outre les étapes de:
envoi de requêtes pour des actions à réaliser sur ladite pluralité d'éléments de réseau non standards (50) depuis ledit gestionnaire (46) sur ladite base de données (45);
réalisation desdites actions sur ladite pluralité d'éléments de réseau non standards (50);
rapport des résultats desdites actions à ladite base de données (45); et
envoi desdits résultats depuis ladite base de données (45) sur ledit gestionnaire (46).

19. Procédé selon la revendication 18, dans lequel ladite étape de détermination de l'état de ladite pluralité d'éléments de réseau non standards (50) inclut les étapes de:
recherche d'une information de gestion à partir de ladite pluralité d'éléments de réseau non standards (50); et
détermination de si oui ou non ladite information de gestion retrouvée est une information de gestion par défaut ou une information de gestion de performance.

20. Procédé selon la revendication 19, dans lequel ladite étape de rafraîchissement de ladite base de données (45) avec une information de gestion inclut l'envoi de notifications de gestion par défaut sur ladite base de données (45) suite à la détermination du fait que ladite information de gestion retrouvée est une information de gestion par défaut.

21. Procédé selon la revendication 20, dans lequel ladite étape de rafraîchissement de ladite base de données (45) avec une information de gestion inclut l'envoi de notifications de gestion de performance sur ladite base de données (45) en tant qu'indicateurs d'état de performance suite à la détermination du fait que ladite information de gestion retrouvée est une information de gestion de performance.
